# EUROPEAN PATENT SPECIFICATION

(11) **EP 2 792 559 B1**
(45) Date of publication and mention of the grant of the patent: **11.07.2018**
(21) Application number: 13164198.7
(22) Date of filing: 17.04.2013
(51) Int. Cl.: B60T 17/22, B05B 9/04, B60S 5/00, F01M 11/04, B67D 7/00, F16N 37/00, B05B 7/00, A01M 7/00

(54) **A portable appliance**
Tragbares Gerät
Appareil portable

(43) Date of publication of application: 22.10.2014
(73) Proprietor: Stanley Works (Europe) GmbH, 8600 Dübendorf (CH)
(72) Inventor: Herisse, Jean Christophe, 91600 Savigny sur Orge (FR); Praudel, Philippe, 91160 Long Jumeau (FR)
(74) Representative: SBD IPAdmin

(56) References cited:
- EP-A2- 1 793 157
- GB-A- 1 590 687
- US-A- 4 109 831
- US-A- 5 716 007
- US-A1- 2007 175 539
- US-A1- 2008 061 166
- US-B1- 6 830 083

## Description

The invention relates to a portable appliance, wherein the portable appliance is a brake bleeder of a clutch bleeder. Such a portable appliance is known for example from document EP-A-1793157. Pumps for delivering a fluid are commonly found in a workshop environment. Such pumps are used in all manner of applications like, for example, pressure-washing, tire inflation, brake bleeding or clutch bleeding and many other applications. In the case of a pressure-washing pump, a water source is needed and the pressure-washer can be connected to a domestic water tap because these are often available within the range of a regular hosepipe. A brake bleeding pump needs to be supplied by fresh brake fluid such as DOT3, DOT4 or DOT5 which is not normally available from a wall-mounted tap in a workshop. Typically, the brake bleeder has its own brake fluid reservoir connected to the pump.

Pumps for delivering a fluid used in a workshop environment normally either need to be portable or need to be equipped with very long hoses so that they can be used for different applications in different locations. Long hoses clutter a workshop environment. It is preferable to have a portable appliance with its own fluid reservoir even though this may add weight, especially when the fluid reservoir is full to capacity. In the case of a brake bleeder or a clutch bleeder, this is addressed by mounting the pump and fluid reservoir on a metal frame with two wheels at the bottom for supporting and transporting the unit and a handle at the top for manipulation by an operator. Examples of this type of unit are the brake and clutch system bleeder type DF.20-100 and the adjustable-pressure electronic brake bleeder type DF.21, both of which are sold under the registered trade mark FACOM.

Brake bleeding is an operation which purges a car's or commercial vehicle's brake system of used brake fluid and replaces fresh brake fluid pumped into the brake system at a regulated pressure. New brake fluid is pumped from a fluid reservoir into the brake system's inlet. Old brake fluid flows from the brake system's outlet to be collected by a collector bottle and discarded in a collection facility. The operator can check for hydraulic system leakage during brake bleeding which is a useful benefit. The operation takes one operator about 10 to 15 minutes when using an appliance such as the aforementioned brake and clutch system bleeder type DF.20-100 or brake bleeder type DF.21. It is recommended that brake fluid in a car is replaced about once every two years or after 40,000km. As such, brake bleeding is an operation which occurs relatively frequently. It is advantageous to have an appliance which is portable and stand-alone with as much capacity and run-time as possible as this helps facilitate efficient and cost-effective use.

The type DF.20-100 appliance is portable and stand-alone. It is adapted for bleeding car and commercial vehicle brake systems and clutch systems. The pump's electric motor is energized by a 12 Volt d.c. electrical supply which is typically from a near-by car or truck battery connected by a pair of electric leads each equipped with a crocodile clip for clasping a terminal of the car battery. The pump's inlet is supplied new fluid by a five litre reservoir mounted to the appliance's frame. The reservoir has an inlet with a screw-cap and a fluid level indicator. The pump's outlet is in-line with a pressure regulator which controls the pressure of new fluid delivered by a four metre delivery hose to the brake system or clutch system. The delivery hose is equipped with a plug for connection to either a brake system or a clutch system. The type DF.21 appliance is very similar, albeit with electronic pressure control for automatically holding fluid pressure in the delivery hose at a constant pre-selected value. Both of the type DF.20-100 and the type DF.21 appliances weigh about 11 kg when their reservoir is not filled with fluid.

It is an object of the present invention to provide a portable appliance which makes improved use of the space it occupies so that it may be more versatile or have improved run-time.

Accordingly, the present invention provides a portable appliance comprising: a body for supporting the portable appliance; a handle for manipulation of the portable appliance; a pump with an inlet and an outlet; a fluid reservoir fluidly coupled to the inlet of the pump; and an electric motor for operating the pump to cause pumping of fluid from the inlet to the outlet when the motor is energized by an electrical power supply, wherein the fluid reservoir is integral with the body. The body and fluid reservoir are united into one piece which helps to economise on the number of components and reduce the overall weight and cost of the appliance. Advantageously, space normally occupied by the body can now be used to store fluid. This increases the overall capacity of the fluid reservoir, and thus increases run-time between refills of the fluid reservoir, without adding bulk to the appliance. The operator saves time refilling the fluid reservoir and the appliance has a greater operating range because refilling is required less frequently.

Preferably, the integral body and fluid reservoir comprises a plastic shell. This is a cost-effective means of producing a rigid and durable body which also has an internal reservoir. A hollow plastic shell facilitates diverse options for an aesthetically appealing design of body.

Preferably, a fluid level indicator is moulded into a side of the fluid reservoir. This allows an operator to view the internal fluid level without adding to the appliance's number of components. The majority of the capacity of the fluid reservoir is located below the middle of the integral body and fluid reservoir when the portable appliance is orientated in its normal condition of operation. This helps to lower the centre of gravity of the appliance, especially when the fluid reservoir is full, so that the appliance is easier to manipulate.

Preferably, the fluid capacity of the fluid reservoir is at least eight litres. This may provide at least a sixty percent increase in run-time between refills of the fluid reservoir in comparison to previous portable appliances of this type.

Preferably, the handle is integral with the integral body and fluid reservoir. This helps to economise on the number of components and reduce the overall weight and cost of the appliance.

Preferably, the portable appliance comprises a bay for receiving an electrical power source for electrical connection to the motor and wherein the bay is integral with the integral body and fluid reservoir. The bay unites the appliance with its own electrical power source so that they may be portable together and avoid the inconvenience of connecting and disconnecting the appliance's motor to different electrical power source. Advantageously, this dispenses with the need for lengthy electrical cables between the appliance and an external electrical power source which can clutter the operator's workspace. The operator need not waste time seeking an electrical power source because one is readily available in the bay. A new electrical power source may replace an old electrical power source at the end of its life or when it needs recharging.

Preferably, the bay has a restraint to restrain an electrical power source received within in the bay. The restraint may be a strap or a wall around the electrical power source or a lid or a door. The restraint may help to secure the electrical power source inside the bay and avoid it accidently falling from the appliance while being moved.

Preferably, the bay a shield to shield an electrical power source received within the bay. The shield may protect the electrical power source from damage, corrosion or unauthorised tampering.

Preferably, the bay is located below the middle of the body when the portable appliance is orientated in its normal condition of operation. This helps to lower the centre of gravity of the appliance so that the appliance is easier to manipulate.

Preferably, the bay is located substantially at the bottom of the body when the portable appliance is orientated in its normal condition of operation. This helps to lower the centre of gravity of the appliance so that the appliance is less likely to topple over when accidently knocked.

The electrical power source may be a battery, preferably a rechargeable battery. Still more preferably, the bay is for receiving a vehicle battery electrically connectable to the motor. A vehicle battery is a readily available source of electrical power, typically being 12 Volts d.c., for the energizing the pump's electric motor. Vehicle batteries are often rechargeable. They are portable and sized for use in a portable appliance. The body has at least one support wheel for movably supporting the portable appliance on a surface. Support wheels allow the appliance to be more easily moved about like a cart.

Preferably, the outlet is fluidly connected to an outlet hose. The outlet hose may be fitted with a connection for delivery of pumped fluid directly to a particular system. The portable appliance is a brake bleeder or a clutch bleeder.

Further features and advantages of the present invention will be understood by reference to the following description, which is given by way of example and in association with the accompanying drawings of which:
Figure 1 shows a front perspective view of a portable appliance equipped with a pump and fluid reservoir in the form of a brake bleeder;
Figure 2 shows a rear perspective view of the portable appliance of Figure 1;
Figure 3 shows a rear perspective view of the portable appliance of Figure 1 with a modified battery receiving bay;
Figure 4 shows a schematic diagram of the internal components the portable appliance of Figure 1; and
Figure 5 shows a schematic diagram of the internal components of a modified version of the portable appliance of Figure 1.

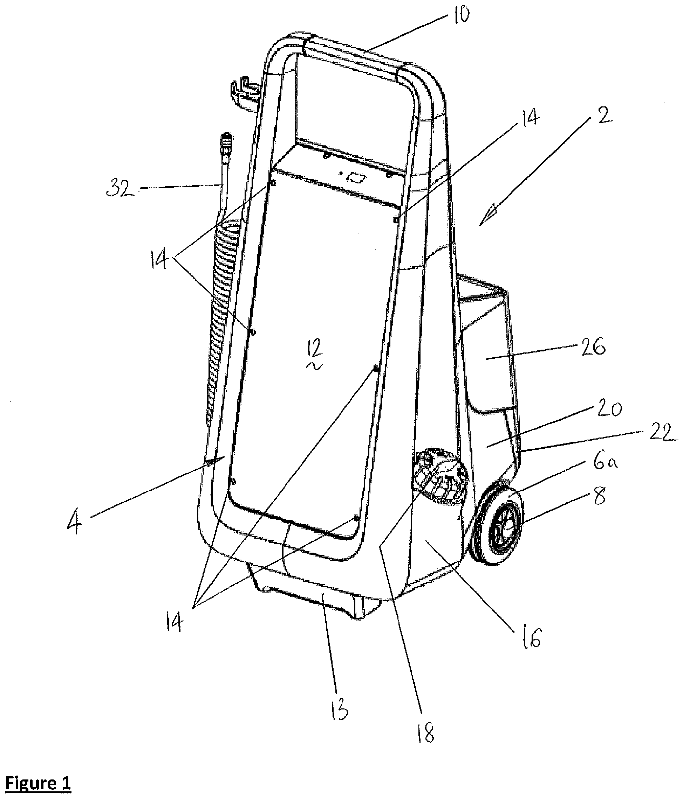

Referring to Figures 1 to 3, there is shown a portable brake bleeder appliance 2 which may also be used as a clutch bleeder. The appliance 2 comprises a body 4 for supporting the appliance on a pair of support wheels 6a, 6b freely rotatingly connected to an axle 8 located at the bottom of the body. The body is a hollow plastic shell. The plastic shell may be made from a blow-moulding process or a rotor-moulding process.

The appliance 2 comprises a handle 10 at the top of the body 4 for manipulation of the appliance, a cover plate 12 on the front of the body 4 for shielding the internal components of the appliance and a foot 13 at the bottom of the body 4 for supporting the appliance on a surface in combination with the support wheels 6a, 6b . The handle 10 and the foot 13 are integrally moulded with the body 4. The cover plate 12 is a metal sheet fastened to the body 4 by screws 14.

The appliance 2 comprises a fluid reservoir 16 for containing a new brake fluid such as DOT3, DOT4 or DOT5, or a clutch fluid. The fluid reservoir has a screw-on removable filler cap 18 for replenishing the fluid reservoir 16 with new fluid. The fluid reservoir 16 occupies the interior of the hollow plastic shell of the body 4 and has a capacity of approximately 10 litres.

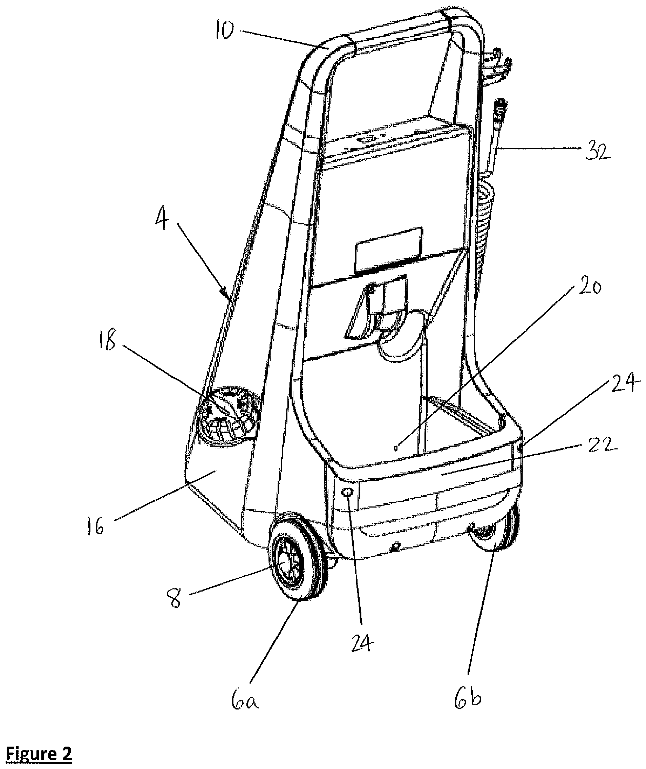

Referring in particular to Figure 2, the appliance 2 comprises a battery receiving bay 20 at the back of the body 4. The battery receiving bay 20 is sized to receive a 12 Volt d.c. rechargeable vehicle battery (not shown). The battery receiving bay 20 has a bay wall 22 to retain a vehicle battery within the confines of the battery receiving bay 20 in normal operating conditions. The battery receiving bay 20 is integral with the body 4. The bay wall 22 is fastened to the rear of the body 4 by screws 24.

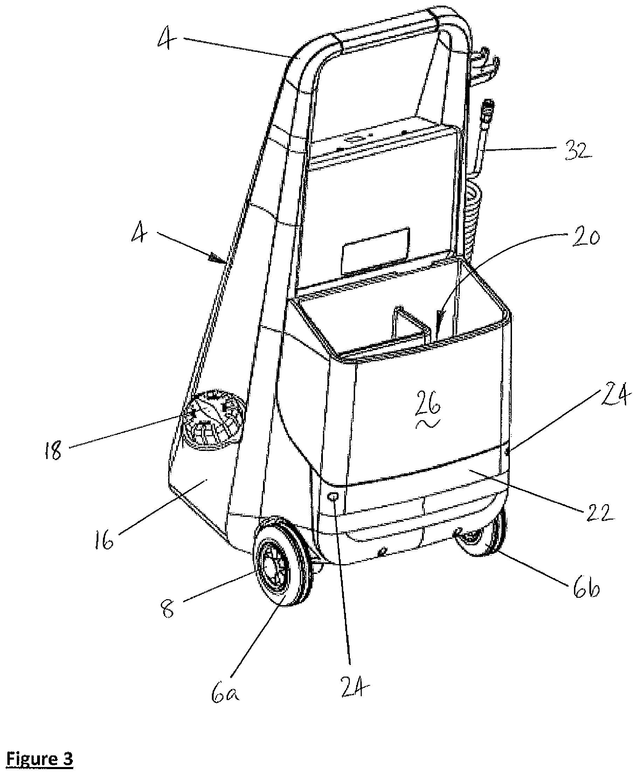

Referring in particular to Figure 3, the appliance 2 comprises a bay cover 26 removably mounted around the top of the battery receiving bay 20 to provide additional protection to a battery located therein and to provide additional storage capacity.

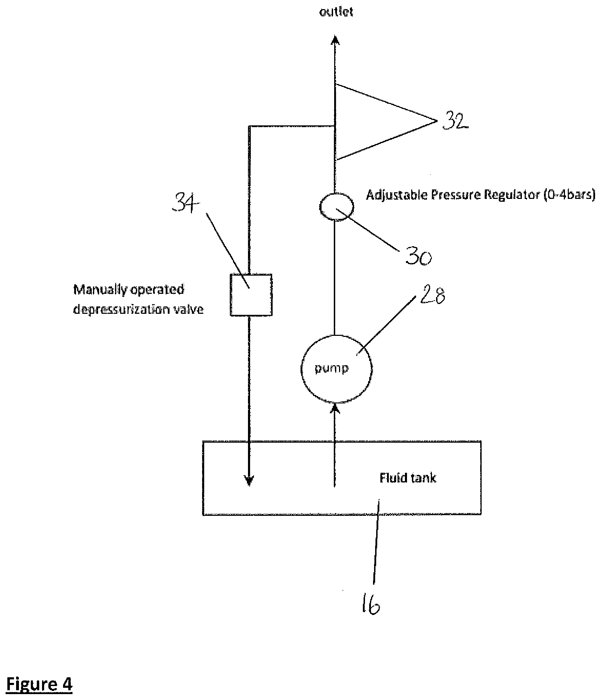

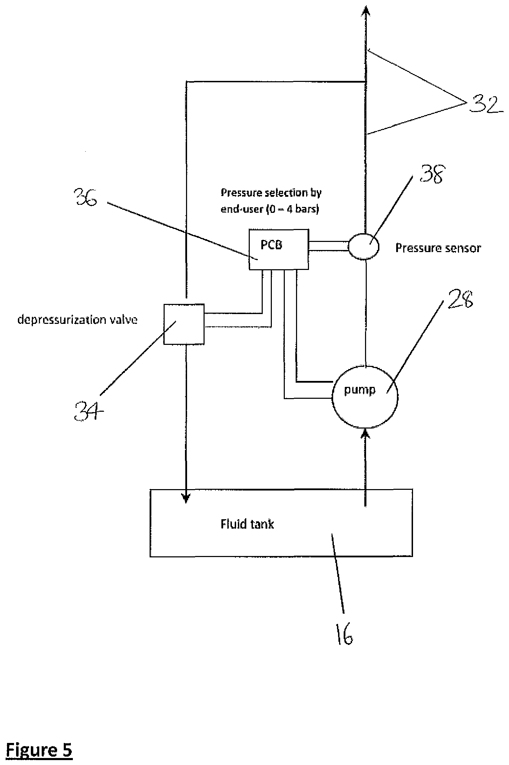

Referring to Figures 4 and 5, the internal components of the appliance 2 include a pump 28 with an inlet and an outlet. The fluid reservoir 16 is fluidly coupled to the inlet of the pump. The appliance 2 comprises an electric motor (not shown) for operating the pump 28 to cause pumping of fluid from the inlet to the outlet when the motor is energized by an electrical power supply located in the battery receiving bay 20. An adjustable pressure regulator 30 is fluidly coupled to the outlet of the pump 28 and in-line with an outlet hose 32 which delivers pressurized brake fluid from the appliance 2 to a brake system. The pressure regulator is manually adjustable to alter brake fluid pressure in the outlet hose 32 between 0 and 4 bar, although the appliance 2 can deliver higher pressures, if necessary.

The internal components of the appliance 2 include an on/off switch (not shown) between the electrical power source (the battery) and the motor for selectively energizing and de-energizing the motor. When the motor is energized, the appliance 2 purges old brake fluid from a brake system which is collected from the brake system outlet and the appliance 2 re-charges the brake system with new brake fluid.

The internal components of the appliance 2 include a manually operated depressurization valve 34 switch between the outlet hose 32 (at a location downstream of the pressure regulator 30) and the fluid reservoir 16. When the operator judges that purging and replenishing of the brake system is complete, the operator closes the brake system's outlet. The brake system is then normally over-pressurized (because the pump 28 is still running). The operator may open the depressurization valve 34 to allow depressurization of the brake system before disconnecting the outlet hose 32 of the appliance 2 from the inlet of the brake system. Surplus brake fluid returns to the fluid reservoir 16.

Referring in particular to Figure 5, a modified version of the appliance 2 comprises an electronic circuit having a printed circuit board 36 for automatically controlling the pump 28 and the depressurization valve 34 in reliance on pressure data supplied by a pressure sensor 38 (substituted for the adjustable pressure regulator 30). The operator, using the electronic circuit, pre-selects a desired brake fluid pressure in the brake system. The printed circuit board 36 monitors the brake fluid pressure in the outlet hose 32 using pressure data supplied by a pressure sensor 38 and de-energizes the motor, thereby stopping the pump 28, when the pre-selected brake fluid pressure is attained. If pre-selected brake fluid pressure is surpassed, the printed circuit board 36 automatically opens the depressurization valve 34 to reduce the brake fluid pressure to the pre-selected amount and return surplus brake fluid to the fluid reservoir 16.

## Claims

1. A portable appliance (2) wherein the portable appliance is a brake bleeder or a clutch bleeder and wherein the portable appliance comprises :
a body (4) for supporting the portable appliance wherein the body (4) has at least one support wheel (6a, 6b) for movably supporting the portable appliance (2) on a surface;
a handle (10) for manipulation of the portable appliance;
a pump (28) with an inlet and an outlet;
a fluid reservoir (16) fluidly coupled to the inlet of the pump;
a removable filler cap (18) for replenishing the fluid reservoir (16) with new fluid; and
an electric motor for operating the pump to cause pumping of fluid from the inlet to the outlet when the motor is energized by an electrical power supply, wherein the fluid reservoir (16) is integral with the body (4) and **characterised in that** the filler cap (18) and the majority of the capacity of the fluid reservoir are located below the middle of the integral body and fluid reservoir when the portable appliance is orientated in its normal condition of operation.

2. A portable appliance as claimed in claim 1, wherein the integral body and fluid reservoir comprises a plastic shell.

3. A portable appliance as claimed in claim 2, wherein a fluid level indicator is moulded into a side of the fluid reservoir.

4. A portable appliance as claimed in any one of the previous claims, wherein the fluid capacity of the fluid reservoir is at least eight litres.

5. A portable appliance as claimed in any one of the previous claims, wherein the handle is integral with the integral body and fluid reservoir.

6. A portable appliance as claimed in any one of the previous claims, wherein the portable appliance comprises a bay (20) for receiving an electrical power source for electrical connection to the motor and wherein the bay is integral with the integral body (4) and fluid reservoir (16).

7. A portable appliance as claimed in claim 6, wherein the bay (20) has a restraint (22) to restrain an electrical power source received within in the bay.

8. A portable appliance as claimed in either one of claims 6 or 7, wherein the bay (20) comprises a shield (26) to shield an electrical power source received within the bay.

9. A portable appliance as claimed in any one of claims 6 to 8, wherein the bay (20) is located below the middle of the body when the portable appliance is orientated in its normal condition of operation.

10. A portable appliance as claimed in claim 9, wherein the bay (20) is located substantially at the bottom of the body (4) when the portable appliance (2) is orientated in its normal condition of operation.

11. A portable appliance as claimed in any one of claims 6 to 11, wherein the bay (20) is for receiving a vehicle battery electrically connectable to the motor.

12. A portable appliance as claimed in any one of the previous claims, wherein at least one support wheel comprises a pair of support wheels (6a, 6b) and wherein the body comprises a foot (13) at the bottom of the body (4) for supporting the appliance (2) on a surface in combination with the support wheels.

13. A portable appliance as claimed in claim 12, wherein the foot (13) is integrally moulded with the body (4).

14. A portable appliance as claimed in any one of the previous claims, wherein the outlet is fluidly connected to an outlet hose (32).

## Patentansprüche

1. Tragbares Gerät (2), wobei das tragbare Gerät ein Bremsenentlüfter oder ein Kupplungsentlüfter ist und wobei das tragbare Gerät umfasst:
einen Körper (4) zum Stützen des tragbaren Geräts, wobei der Körper (4) mindestens ein Stützrad (6a, 6b) zum bewegbaren Stützen des tragbaren Geräts (2) auf einer Oberfläche aufweist;
einen Griff (10) zur Handhabung des tragbaren Geräts;
eine Pumpe (28) mit einem Einlass und einem Auslass;
ein Fluidreservoir (16), das fluidisch mit dem Einlass der Pumpe gekoppelt ist;
eine entfernbare Einfüllkappe (18) zum Nachfüllen des Fluidreservoirs (16) mit neuer Flüssigkeit; und
einen Elektromotor zum Betreiben der Pumpe, um ein Pumpen von Fluid von dem Einlass zu dem Auslass zu bewirken, wenn der Motor durch eine elektrische Energieversorgung mit Energie versorgt ist,
wobei das Fluidreservoir (16) integral mit dem Körper (4) ist und **dadurch gekennzeichnet ist, dass** die Einfüllkappe (18) und der Hauptteil der Kapazität des Fluidreservoirs unterhalb der Mitte des integralen Körpers und Fluidreservoirs angeordnet sind, wenn das tragbare Gerät in seinem normalen Betriebszustand orientiert ist.

2. Tragbares Gerät nach Anspruch 1, wobei der integrale Körper und das Fluidreservoir eine Kunststoffschale umfassen.

3. Tragbares Gerät nach Anspruch 2, wobei ein Flüssigkeitsstandsanzeiger in eine Seite des Fluidreservoirs eingeformt ist.

4. Tragbares Gerät nach einem der vorstehenden Ansprüche, wobei die Fluidkapazität des Fluidreservoirs mindestens acht Liter beträgt.

5. Tragbares Gerät nach einem der vorstehenden Ansprüche, wobei der Griff integral mit dem integralen Körper und Fluidreservoir ist.

6. Tragbares Gerät nach einem der vorstehenden Ansprüche, wobei die tragbare Vorrichtung eine Bucht (20) zum Aufnehmen einer elektrischen Energiequelle zur elektrischen Verbindung mit dem Motor umfasst und wobei die Bucht integral mit dem integralen Körper (4) und Fluidreservoir (16) ist.

7. Tragbares Gerät nach Anspruch 6, wobei die Bucht (20) eine Halteeinrichtung (22) aufweist, um eine elektrische Energiequelle, die in der Bucht aufgenommen ist, zu halten.

8. Tragbares Gerät nach einem der Ansprüche 6 oder 7, wobei die Bucht (20) eine Abschirmung (26) zum Abschirmen einer in der Bucht aufgenommenen elektrischen Energiequelle umfasst.

9. Tragbares Gerät nach einem der Ansprüche 6 bis 8, wobei die Bucht (20) unterhalb der Mitte des Körpers angeordnet ist, wenn das tragbare Gerät in seinem normalen Betriebszustand orientiert ist.

10. Tragbares Gerät nach Anspruch 9, wobei die Bucht (20) im Wesentlichen an der Unterseite des Körpers (4) angeordnet ist, wenn das tragbare Gerät (2) in seinem normalen Betriebszustand orientiert ist.

11. Tragbares Gerät nach einem der Ansprüche 6 bis 11, wobei die Bucht (20) zum Aufnehmen einer Fahrzeugbatterie dient, die elektrisch mit dem Motor verbindbar ist.

12. Tragbares Gerät nach einem der vorstehenden Ansprüche, wobei mindestens ein Stützrad ein Paar von Stützrädern (6a, 6b) umfasst, und wobei der Körper an der Unterseite des Körpers (4) einen Fuß (13) zum Stützen des Geräts (2) auf einer Fläche in Kombination mit den Stützrädern, umfasst.

13. Tragbares Gerät nach Anspruch 12, wobei der Fuß (13) integral mit dem Körper (4) geformt ist.

14. Tragbares Gerät nach einem der vorstehenden Ansprüche, wobei der Auslass fluidisch mit einem Auslassschlauch (32) verbunden ist.

## Revendications

1. Appareil portable (2), dans lequel l'appareil portable est un purgeur de frein ou un purgeur d'embrayage et dans lequel l'appareil portable comprend :
un corps (4) pour supporter l'appareil portable, dans lequel le corps (4) a au moins une roue de support (6a, 6b) pour supporter de manière mobile d'appareil portable (2) sur une surface ;
une poignée (10) pour la manipulation de l'appareil portable ;
une pompe (28) avec une entrée et une sortie ;
un réservoir de fluide (16) couplé de manière fluidique à l'entrée de la pompe ;
un bouchon de remplissage amovible (18) pour refaire le plein du réservoir de fluide (16) par un nouveau fluide ; et
un moteur électrique pour faire fonctionner la pompe afin de provoquer le pompage de fluide de l'entrée à la sortie lorsque le moteur est excité par une alimentation électrique, dans lequel le réservoir de fluide (16) est formé d'un seul tenant avec le corps (4) et est **caractérisé en ce que** le bouchon de remplissage (18) et la plus grande partie de la capacité du réservoir de fluide sont situés en dessous du centre du corps et du réservoir de fluide d'un seul tenant lorsque l'appareil portable est orienté dans son état de fonctionnement normal.

2. Appareil portable selon la revendication 1, dans lequel le corps et le réservoir de fluide d'un seul tenant comprennent une coque en matière plastique.

3. Appareil portable selon la revendication 2, dans lequel un indicateur de niveau de fluide est moulé dans un côté du réservoir de fluide.

4. Appareil portable selon l'une quelconque des revendications précédentes, dans lequel la capacité de fluide du réservoir de fluide est d'au moins huit litres.

5. Appareil portable selon l'une quelconque des revendications précédentes, dans lequel la poignée fait partie intégrante du corps et du réservoir de fluide d'un seul tenant.

6. Appareil portable selon l'une quelconque des revendications précédentes, dans lequel l'appareil portable comprend une niche (20) pour recevoir une source d'énergie électrique pour une connexion électrique avec le moteur et dans lequel la niche fait partie intégrante du corps (4) et du réservoir de fluide (16) d'un seul tenant.

7. Appareil portable selon la revendication 6, dans lequel la niche (20) a un renfoncement (22) pour retenir une source d'énergie électrique reçue dans la niche.

8. Appareil portable selon l'une ou l'autre des revendications 6 ou 7, dans lequel la niche (20) comprend un bouclier (26) pour protéger une source d'énergie électrique reçue dans la niche.

9. Appareil portable selon l'une quelconque des revendications 6 à 8, dans lequel la niche (20) est située en dessous du centre du corps lorsque l'appareil portable est orienté dans son état de fonctionnement normal.

10. Appareil portable selon la revendication 9, dans lequel la niche (20) est située sensiblement au fond du corps (4) lorsque l'appareil portable (2) est orienté dans son état de fonctionnement normal.

11. Appareil portable selon l'une quelconque des revendications 6 à 11, dans lequel la niche (20) est destinée à recevoir une batterie de véhicule qui peut être connectée électriquement au moteur.

12. Appareil portable selon l'une quelconque des revendications précédentes, dans lequel au moins une roue de support comprend une paire de roues de support (6a, 6b) et dans lequel le corps comprend un pied (13) au fond du corps (4) pour supporter l'appareil (2) sur une surface en combinaison avec les roues de support.

13. Appareil portable selon la revendication 12, dans lequel le pied (13) est moulé d'un seul tenant avec le corps (4).

14. Appareil portable selon l'une quelconque des revendications précédentes, dans lequel la sortie est en communication fluidique avec un tuyau de sortie souple (32).
